# EUROPÄISCHE PATENTSCHRIFT

(11) **EP 0 947 243 B1**
(45) Veröffentlichungstag und Bekanntmachung des Hinweises auf die Patenterteilung: **27.10.2004**
(21) Anmeldenummer: 99106684.6
(22) Anmeldetag: 01.04.1999
(51) Int. Cl.: B01F 17/00

(54) **Mittel mit Copolymerisaten aus N-Vinylcarbonsäureamiden und Monomeren mit hydrophobem Rest, und Verwendung dieser Copolymerisate**
Agent containing copolymers of n-vinyl carboxylic acid amides and monomers with hydrophobic moiety and their use
Agent contenant des copolymères d'amides d'acide n-vinyl carboxylique et de monomeres à reste hydrophobe et utilisation de ces copolymeres

(30) Priorität: 03.04.1998 DE 19815127
(43) Veröffentlichungstag der Anmeldung: 06.10.1999
(73) Patentinhaber: BASF AKTIENGESELLSCHAFT, 67056 Ludwigshafen (DE)
(72) Erfinder: Kothrade, Stephan, 67117 Limburgerhof (DE); Negele, Anton, 67146 Deidesheim (DE); Meffert, Helmut, 68161 Mannheim (DE); Sanner, Axel, 67227 Frankenthal (DE)
(74) Vertreter: Kinzebach, Werner, Dr.

(56) Entgegenhaltungen:
- DE-A- 3 447 356
- US-A- 5 270 379

## Beschreibung

Die vorliegende Erfindung betrifft Mittel, enthaltend wenigstens einen wasserunlöslichen Inhaltsstoff und wenigstens ein Copolymerisat aus wenigstens einem N-Vinylcarbonsäureamid, wenigstens einem Monomer mit hydrophobem Rest und gegebenenfalls wenigstens einem copolymerisierbaren Monomer. Sie betrifft auch die Verwendung dieser Copolymerisate als Lösungsvermittler und als Schutzkolloid, insbesondere zur Stabilisierung von Öl-in-Wasser-Emulsionen.

N-Vinylcarbonsäureamide enthaltende Homo- und Copolymere haben bei der Herstellung von Papier, Pappe und Karton große Bedeutung erlangt. Aus der US 4,421,602 und der EP 0 071 050 sind hydrolysierte Homopolymerisate von N-Vinylformamid bekannt, die 90 bis 10 Mol-% Vinylamin-Einheiten und 10 bis 90 Mol-% N-Vinylformamid-Einheiten enthalten. Die hydrolysierten Polyvinylformamide werden als Retentions- und Entwässerungsmittel bei der Herstellung von Papier verwendet. Darauf aufbauend beschreibt die EP 0 438 755 hydrolysierte Homopolymerisate von N-Vinylformamid, die weniger als 10 Mol-% Vinylamin-Einheiten enthalten und als Entwässerungs-, Retentions- und Flockungsmittel für die Papierherstellung aus störstoffhaltigen Papierstoffen Anwendung finden.

Zur Verfestigung von Papier beschreibt die US 3,207,656 die Verwendung wasserlöslicher Copolymere, die auf kationischen Sulfoniumionen tragenden Estern der Acrylsäure oder Methacrylsäure basieren. C₁-C₁₀-Alkylester der Acrylsäure und Methacrylsäure, C₁-C₄-Alkylvinylester oder N-Vinylcarbonsäureamide können zum Aufbau entsprechender Copolymere mitverwendet werden.

Aus der EP 0 251 182 sind Copolymerisate bekannt, die neben N-Vinylformamid und N-Vinylamin auch Acrylnitril-Einheiten sowie gegebenenfalls geringe Anteile an Acrylamid- und Acrylsäure-Einheiten enthalten. Auch diese Copolymerisate finden in der Papierindustrie Anwendung.

Zur Verwendung als Naß- und Trockenverfestigungsmittel für Papier beschreibt die EP 0 216 387 Copolymere, die neben N-Vinylformamid auch andere ethylenisch ungesättigte Monomere, wie Vinylacetat, vinylpropionat, C₁-C₄-Alkylvinylether, N-Vinylpyrrolidon, Acrylsäureamid oder C₁-C₁₈-Alkylester von Acryl- und Methacrylsäure enthalten können. Durch partielle oder vollständige Hydrolyse dieser Copolymeren gelangt man ebenfalls zu Copolymerisaten, die Vinylamineinheiten enthalten.

Auch die DE 36 20 065 offenbart Polymerisate zur Herstellung von Papier, Pappe und Karton, die auf N-Vinylcarbonsäureamiden oder cyclischen N-Vinylamiden, wie N-Vinyllactamen, basieren. Diese als Entwässerungs-, Retentions- und Flockungsmittel brauchbaren Polymerisate können ferner (Meth)acrylamid, (Meth)acrylnitril, C₁-C₁₈-Alkylester von Acryl- und Methacrylsäure, C₁-C₄-Alkylvinylester oder C₁-C₄-Alkylvinylether enthalten.

Die Herstellung weiterer für die Papierherstellung brauchbarer Copolymerisate aus N-Vinylcarbonsäureamiden wird in der EP 0 337 310 und der EP 0 528 409 beschrieben. Wasserlösliche Copolymerisate aus N-Vinylcarbonsäureamiden und Acrylaten, Acrylamid, Acrylsäure- oder Acrylamid-Derivaten werden in der JP-A-84/033312 hergestellt.

Auch in anderen technischen Gebieten als der Papierherstellung ist der Einsatz von N-Vinylcarbonsäureamiden bekannt.

So werden in der WO 82/02073 Copolymerisate beschrieben, die neben N-Vinylformamiden weitere Comonomere, wie Acrylamid, (Meth)acrylnitril, (Meth)acrylsäure oder C₁-C₆-Alkylester der Acryl- oder Methacrylsäure enthalten können. Derartige Copolymerisate finden als Reibungsverminderer für Säuren in der Erdöl- und Erdgasförderung Anwendung.

Die JP-A-84/039399 beschreibt hydrolysiertes N-Vinylcarbonsäureamid enthaltende Copolymerisate zur Entwässerung von Schlämmen.

Ein kationisches Polymerisationsverfahren zur Synthese von N-Vinylformamid oder N-Vinylacetamid enthaltenden Oligomeren oder Polymeren ist aus der DE 43 22 854 bekannt. Als mögliche Comonomere werden Vinylether, insbesondere Butylvinylether, Styrol, α-Methylstyrol, Isobutylen und alkylsubstituierte Olefine genannt. Diese Polymere sollen in hydrolysierter, teilweise hydrolysierter oder unhydrolysierter Form in Klebstoffen, Bindemitteln, bei der Wasserbehandlung, der Papierherstellung, der Öl- und Mineralförderung, der Körperpflege und der Biomedizin Anwendung finden können.

In Reinigungsprozessen brauchbare Polymere beschreibt die EP 0 753 570. Neben N-Vinylcarbonsäureamiden können diese Polymere gegebenenfalls weitere Comonomere enthalten, wie C₁-C₁₈-Alkylvinylester, C₁-C₄-Alkylester der Acryl- oder Methacrylsäure oder gegebenenfalls mit C₁-C₁₀-Resten substituierte Acryl- oder Methacrylamide. Durch die Verwendung dieser Polymere soll das Wiederabsetzen des Schmutzes nach erfolgter Reinigung verhindert und dem gereinigten Gegenstand eine gewisse Widerstandsfähigkeit gegen Schmutz verliehen werden.

Die WO 96/03969 und die US 5,478,533 beschreiben Haarpflegemittel, enthaltend ein N-Vinylformamid-Homopolymer oder ein Copolymer aus N-Vinylformamid-Einheiten und einem weiteren Vinylmonomer, ausgewählt unter Styrolen, C₁-C₁₈-Alkylestern von Acryl- und Methacrylsäure, C₁-C₁₈-Alkylvinylestern, N-C₁-C₁₂-N'-C₁-C₁₈-Alkyl- substituierten Acryl- und Methacrylamiden, Estern von Fumar-, Itacon- und Maleinsäure, Vinylethern, wie Methylvinyl- oder Isobutylvinylether, hydroxy-funktionalisierten Acrylaten und Methacrylaten, Acrylamid, cyclischen Amiden und anderen Monomeren. Derartige Polymer sollen den Haarpflegemitteln haarfestigende und haarkonditionierende Eigenschaften verleihen.

Schließlich sind in der DE-OS 25 14 100 Copolymere aus N-Vinylpyrrolidon und C₆-C₂₄-Alkyl(meth)acrylaten sowie Terpolymere aus N-Vinylpyrrolidon, Vinylacetat und C₆-C₂₄-Alkyl(meth)acrylaten zur Verwendung als Emulgatoren für Emulsionen vom Wasser-in-Öl-Typ, beispielsweise Cremes, beschrieben.

Viele Wirk- und Hilfsstoffe, die als Inhaltsstoffe in pharmazeutischen oder kosmetischen Mitteln sowie Mitteln zur Pflanzenbehandlung oder für die Ernährungstechnologie verwendet werden, sind nicht in ausreichendem Maße wasserlöslich. Dies hat häufig Nachteile zur Folge, beispielsweise werden keine homogenen und aspektmäßig einwandfreien Formulierungen erhalten oder die angestrebte Wirkung wird beeinträchtigt, z. B. durch eine geringe Bioverfügbarkeit eines Wirkstoffes. Eine Möglichkeit zur Verringerung derartiger Nachteile besteht darin, die schwer- oder unlöslichen Inhaltsstoffe mit Lösungsvermittlern, in der Regel amphiphilen Hilfsstoffen, z.B. Tensiden, zu solubilisieren. Auf diese Art und Weise kann auch die Bioverfügbarkeit und Wirksamkeit eines Wirkstoffes verbessert werden.

Der vorliegenden Erfindung liegt die Aufgabe zugrunde, Mittel zur Verfügung zu stellen, die eine bessere Solubilisierung wasserunlöslicher Inhaltsstoffe ermöglichen.

Gelöst wird diese Aufgabe überraschenderweise durch ein Mittel, enthaltend wenigstens einen wasserunlöslichen Inhaltstoff und wenigstens ein Copolymerisat aus
A) 5 bis 99 Gew.-% wenigstens eines N-Vinylcarbonsäureamids der Formel I 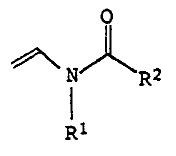 worin R¹ und R² unabhängig voneinander für Wasserstoff oder C₁-C₆-Alkyl, vorzugsweise C₁-C₃-Alkyl, stehen;
B) 1 bis 95 Gew.-% wenigstens eines Monomers mit hydrophobem Rest, das mit Vinylcarbonsäureamiden der Formel I copolymerisierbar ist und das ausgewählt ist wie im Anspruch 1 definiert; und gegebenenfalls
C) 0 bis 94 Gew.-% wenigstens eines weiteren copolymerisierbaren Monomers.

Soweit keine anderen Angaben gemacht werden, gelten bei der konkreten Beschreibung der Erfindung folgende Definitionen:

Der Ausdruck "Alkyl" umfaßt geradkettige oder verzweigte Alkylgruppen, wie Methyl, Ethyl, Propyl, Isopropyl, n-Butyl, Isobutyl, t-Butyl, n-Pentyl, Neopentyl, n-Hexyl, n-Heptyl, n-Octyl, 2-Ethylhexyl, n-Nonyl, n-Decyl, n-Undecyl, Lauryl, Myristyl, Cetyl, Stearyl, Arachinyl, Behenyl oder Lignoceryl.

Der Ausdruck "Alkenyl" umfaßt geradkettige oder verzweigte, einfach oder mehrfach ungesättigte Alkenylgruppen, wie Palmitoleyl, Oleyl, Linoleyl, Linolenyl oder Arachidonyl.

Der Ausdruck "Cycloalkyl" umfaßt Cycloalkylreste, wie z.B. Cyclopropyl, Cyclobutyl, Cyclopentyl, Cyclohexyl, Cycloheptyl oder Cyclooctyl.

Der Ausdruck "monoethylenisch ungesättigte C₃-C₈-Carbonsäure" umfaßt sowohl Mono- als auch Dicarbonsäuren. Hierzu zählen beispielsweise Acrylsäure, Methacrylsäure, Dimethacrylsäure, Ethacrylsäure, Maleinsäure, Citraconsäure, Methylenmalonsäure, Allylessigsäure, Vinylessigsäure, Crotonsäure, Fumarsäure, Mesaconsäure oder Itaconsäure. Von diesen sind (Meth)acrylsäure oder Maleinsäure bevorzugt. Die Schreibweise "(meth)acryl" wird zusammenfassend für "methacryl" und "acryl" verwendet.

Auch umfaßt der Ausdruck "monoethylenisch ungesättigte C₃-C₈-Carbonsäure" sowohl freie als auch partiell oder vollständig neutralisierte Säuren sowie Anhydride. Unter neutralisierten Säuren versteht man in diesem Zusammenhang Salze, die durch Umsetzung der Säuren mit Basen erhalten werden. Zu diesem Zweck sind Alkalimetall- oder Erdalkalimetallbasen, beispielsweise Natronlauge, Kalilauge, Natrium- oder Kaliumcarbonat, Natrium- oder Kaliumhydrogencarbonat, Magnesiumoxid, Calciumhydroxid, Calciumoxid, gasförmiges oder wäßriges Ammoniak, oder Amine, beispielsweise Triethylamin, Ethanolamin, Diethanolamin, Triethanolamin, Morpholin, Diethylentriamin oder Tetraethylenpentamin, bevorzugt.

Zu den Estern und Amiden monoethylenisch ungesättigter Dicarbonsäuren gehören auch die Halbester bzw. Halbamide.

Der Ausdruck "aliphatischer Rest" umfaßt geradkettige oder verzweigte, gesättigte oder ein- oder mehrfach ungesättigte, und/oder ein- oder mehrfach durch unabhängig aus O, S, CO oder SO₂ ausgewählte Gruppen unterbrochene Kohlenstoffwasserstoffreste. Entsprechendes gilt für cycloaliphatische Reste, die zusätzlich wenigstens eine cyclische Struktureinheit aufweisen.

Zum Aufbau der erfindungsgemäßen Copolymerisate setzt man als Monomere A) N-Vinylcarbonsäureamide der Formel I in Menge von 5 bis 99 Gew.-%, vorzugsweise 10 bis 90 Gew.-% und insbesondere 15 bis 60 Gew.-%, ein.

Das N-Vinylcarbonsäureamid der Formel I wird vorzugsweise unter N-Vinylformamid, N-Vinyl-N-methylformamid, N-Vinyl-N-ethylformamid, N-Vinyl-N-propylformamid, N-Vinyl-N-isopropylformamid, N-Vinyl-N-n-butylformamid, N-Vinyl-N-isobutylformamid, N-Vinyl-N-t-butylformamid, N-Vinyl-N-n-pentylformamid, N-Vinyl-N-n-hexylformamid, N-Vinylacetamid, N-Vinyl-N-methylacetamid, N-Vinyl-N-ethylacetamid, N-Vinylpropionamid, N-Vinyl-N-methylpropionamid und N-Vinylbutyramid ausgewählt. Insbesondere bevorzugt sind N-Vinylformamid und N-Vinyl-N-methylacetamid.

Selbstverständlich können auch Mischungen der oben genannten N-Vinylcarbonsäureamide eingesetzt werden.

Ferner setzt man zum Aufbau der erfindungsgemäßen Copolymerisate Monomere B) mit hydrophobem Rest, die mit Vinylcarbonsäureamiden der Formel I copolymerisierbar sind, in Mengen von 1 bis 95 Gew.-%, vorzugsweise 3 bis 50 Gew.-% und insbesondere 5 bis 40 Gew.-%, ein. Die Monomere B) werden gemäß der Erfindung ausgewählt unter b1)-b4) wie im Anspruch 1 definiert.

Bei den Monomeren B) handelt es sich in der Regel um langkettige, aliphatische oder cycloaliphatische Reste mit wenigstens 8, vorzugsweise bis zu 30 und insbesondere mit 12 bis 24 Kohlenstoffatomen.

Von obigen aliphatischen Resten sind Alkyl- oder Alkenylreste, insbesondere n-Octyl, 2-Ethylhexyl, n-Nonyl, n-Decyl, Lauryl, Myristyl, Cetyl, Stearyl, Behenyl oder Oleyl, bevorzugt.

Bei den cycloaliphatischen Resten handelt es sich vorzugsweise um C₅-C₈-Cycloalkylreste, insbesondere Cyclohexyl oder Cycloheptyl, die mit C₁-C₄-Alkyl substituiert sind. Ganz besonders bevorzugt ist t-Butylcyclohexyl.

Ester monoethylenisch ungesättigter C₃-C₈-Carbonsäuren mit aliphatischen oder cycloaliphatischen C₈-C₃₀-Alkoholen, vorzugsweise C₁₂-C₂₄-Alkoholen, gehören zu den bevorzugten Monomeren mit hydrophobem Rest, wobei sich die aliphatischen oder cycloaliphatischen Alkohole von den entsprechenden, oben definierten, aliphatischen oder cycloaliphatischen Resten ableiten. Vorzugweise handelt es sich um die primären Monoalkohole derartiger Reste.

Auch Amide monoethylenisch ungesättigter C₃-C₈-Carbonsäuren mit primären oder sekundären Aminen mit wenigstens einem der oben definierten, aliphatischen oder cycloaliphatischen C₈-C₃₀-, vorzugsweise C₈-C₁₈-Reste gehören zu den bevorzugten Monomeren mit hydrophobem Rest. Primäre Amine führen zu N-monosubstituierten Amiden, während sekundäre Amine zu N,N'-disubstituierten Amiden führen. Die sekundären Amine können zwei, auch voneinander verschiedene, aliphatische oder cycloaliphatische C₈-C₃₀-, vorzugsweise C₈-C₁₈-Reste, oder nur einen dieser Reste zusammen mit einen aliphatischen oder cycloaliphatischen Rest mit 1 bis 7 Kohlenstoffatomen, bei dem es sich vorzugsweise um einen der oben definierten C₁-C₇-Alkylreste handelt, tragen.

Gemäß einer bevorzugten Ausführungsform der vorliegenden Erfindung werden die vorstehend beschriebenen Ester und Amide monoethylenisch ungesättigter C₃-C₈-Carbonsäuren unter Verbindungen der Formel II 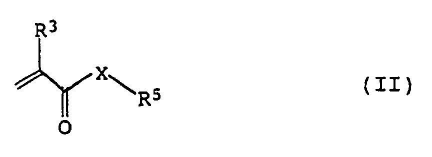 ausgewählt,
worin R³ für ein Wasserstoffatom oder eine Methylgruppe steht,
- X: für 0 oder NR⁴ steht,
- R⁴: für H oder C₁-C₃₀-Alkyl steht und
- R⁵: für C₈-C₃₀-Alkyl, C₈-C₃₀-Cycloalkyl oder C₈-C₃₀-Alkenyl steht.

Beispiele geeigneter, mit Vinylcarbonsäureamiden der Formel I copolymerisierbarer Monomere B) sind die (Meth)acrylatester Octyl(meth)acrylat, 2-Ethylhexyl(meth)acrylat, Nonyl(meth)acrylat, Decyl(meth)acrylat, Lauryl(meth)acrylat, Myristyl(meth)acrylat, Cetyl(meth)acrylat, Stearyl(meth)acrylat, Oleyl(meth)acrylat, Behenyl(meth)acrylat und t-Butylcyclohexyl(meth)acrylat sowie die (Meth)acrylamide N-Stearyl(meth)acrylamid, N-Octyl(meth)acrylamid, N,N-Dioctyl(meth)acrylamid, N-Cetyl(meth)acrylamid, N-Dodecyl(meth)acrylamid, N-Myristyl(meth)acrylamid und 2-Ethylhexyl(meth)acrylamid.

Auch Vinylester aliphatischer oder cycloaliphatischer C₈-C₃₀-, vorzugsweise C₈-C₁₈-Carbonsäuren, gehören zu den bevorzugten Monomeren mit hydrophobem Rest. Die aliphatischen oder cycloaliphatischen Carbonsäuren leiten sich von den entsprechenden, oben definierten, aliphatischen oder cycloaliphatischen Resten ab, wobei es sich vorzugsweise um Monocarbonsäuren handelt.

Beispiele geeigneter, mit N-Vinylcarbonsäureamiden der Formel I copolymerisierbarer Monomere B) sind demnach auch die Vinylester der Octansäure, Nonansäure, Decansäure, Undecansäure, Laurinsäure, Tridecansäure, Myristinsäure, Palmitinsäure, Stearinsäure, Arachinsäure oder Behensäure oder der Ölsäure.

Ferner gehören auch Vinylether aliphatischer oder cycloaliphatischer C₈-C₃₀-, vorzugsweise C₈-C₁₈-Alkohole, zu den bevorzugten. Monomeren mit hydrophobem Rest. Die aliphatischen oder cycloaliphatischen Alkohole leiten sich von den entsprechenden, oben definierten, aliphatischen oder cycloaliphatischen Resten ab, wobei es sich vorzugsweise um Monoalkohole handelt.

Beispiele geeigneter, mit N-Vinylcarbonsäureamiden der Formel I copolymerisierbarer Monomere B) sind demnach auch die Vinylether des Octylalkohols, 2-Ethylhexylalkohols, 1-Nonylalkohols, Decylalkohols, Undecylalkohols, Laurylalkohols, Tridecylalkohols, Myristylalkohols, Palmitylalkohols, Stearylalkohols, Arachinylalkohols oder Behenylalkohols oder des Oleylalkohols.

Ferner können zum Aufbau der erfindungsgemäßen Copolymerisate auch weitere, mit N-Vinylcarbonsäureamiden der Formel I copolymerisierbare Monomere C) in Menge von 0 bis 94 Gew.-%, vorzugsweise 0 bis 50 Gew.-% und insbesondere 0 bis 20 Gew.-%, eingesetzt werden.

Insbesondere handelt es sich dabei um folgende Monomere:
c1) Die oben definierten monoethylenisch ungesättigten C₃-C₈-Carbonsäuren;
c2) Ester monoethylenisch ungesättigter C₃-C₈-Carbonsäuren mit aliphatischen oder cycloaliphatischen C₁-C₇-Alkoholen, C₁-C₄-Diolen, Mono- oder Di-C₁-C₄-Alkylamino-C₁-C₄-Alkoholen. Die aliphatischen oder cycloaliphatischen Alkohole leiten sich von den entsprechenden oben definierten Alkylresten ab, wobei es sich vorzugsweise um primäre Monoalkohole handelt. Auch die C₁-C₄-Diole weisen bevorzugt zumindest eine primäre Hydroxygruppen auf, wie Ethan-1,2-diol, Propan-1,3-diol, Butan-1,3-diol oder 2-Methylpropan-1,3-diol. Die Aminogruppen der Mono- bzw. Di-C₁-C₄-alkylamino-C₁-C₄-Alkohole sind einfach bzw. zweifach mit unabhängig voneinander aus Wasserstoff und C₁-C₄-Alkylresten ausgewählten Gruppen substituiert;
   zu diesen Monomeren c2) zählen beispielsweise (Meth)acrylsäuremethylester, (Meth)acrylsäureethylester, Hydroxyethyl(meth)acrylat, Hydroxypropyl(meth)acrylat, Hydroxybutyl(meth)acrylat, Hydroxyisobutyl(meth)acrylat, Maleinsäuremonomethylester, Maleinsäuredimethylester, Maleinsäuremonoethylester, Maleinsäurediethylester, Dimethylaminoethyl(meth)acrylat, Diethylaminoethyl(meth)acrylat, t-Butylaminoethyl(meth)acrylat oder Dimethylaminopropyl(meth)acrylat;
c3) Amide monoethylenisch ungesättigter C₃-C₈-Carbonsäuren und Mono- oder Di-C₁-C₇-Alkylamide, vorzugsweise Mono- oder Di-C₁-C₄-Alkylamide, monoethylenisch ungesättigter C₃-C₈-Carbonsäuren. Bei den Mono- bzw. Dialkylamide handelt es sich um N-mono bzw. N,N-disubstituierte Amide monoethylenisch ungesättigter C₃-C₈-Carbonsäuren, die einfach oder zweifach mit unabhängig aus Wasserstoff und den oben definierten Alkylresten ausgewählten Gruppen substituiert sind;
   zu diesen Monomeren c3) zählen beispielsweise (Meth)acrylamid, N,N-Dimethyl(meth)acrylamid oder N-t-Butyl(meth)acrylamid;
c4) Nitrile monoethylenisch ungesättigter C₃-C₈-Carbonsäuren, beispielsweise (Meth)acrylnitril;
c5) N-Vinyllactame und N-Vinylimidazole, beispielsweise N-Vinylpyrrolidon, N-Vinylcaprolactam, N-Vinylimidazol, N-Vinyl-2-methylimidazol oder N-Vinyl-4-methylimidazol;
c6) Monoethylenisch ungesättigte Verbindungen mit Sulfonsäuregruppen, beispielsweise Vinylsulfonsäure, Allylsulfonsäure, Methallylsulfonsäure, Styrolsulfonsäure, (Meth)acrylsäure-(3-sulfopropyl)ester oder Acrylamidoethylpropansulfonsäure;
c7) Monoethylenisch ungesättigte Verbindungen mit Phosphonsäuregruppen, beispielsweise Vinylphosphonsäure, Allylphosphonsäure oder Acrylamidomethylpropanphosphonsäure;
c8) vinylester aliphatischer oder cycloaliphatischer C₁-C₇-Carbonsäuren. Die cycloaliphatischen C₁-C₇-Carbonsäuren leiten sich von den entsprechenden oben definierten Alkylresten ab, wobei es sich vorzugsweise um Monocarbonsäuren handelt. Als Beispiele können Vinylacetat und Vinylpropionat genannt werden;
c9) Vinylether aliphatischer oder cycloaliphatischer C₁-C₇-Alkohole, vorzugsweise C₁-C₄-Alkohole, wobei sich die aliphatischen oder cycloaliphatischen Alkohole von den oben beschriebenen Alkylresten ableiten. Es handelt sich vorzugsweise um primäre Monoalkohole;
   zu den Monomeren c9) zählen beispielsweise Methylvinylether, Ethylvinylether, Propylvinylether, Isopropylvinylether, n-Butylvinylether oder Isobutylvinylether;
c10) Vinylaromatische Verbindungen, beispielsweise Styrol und substituierte Styrole, wie β-Methylstyrol und α-Methylstyrol;
c11) Acrylamidoglykolsäure oder Diallylammoniumchlorid.

Selbstverständlich können auch Mischungen der oben genannten copolymerisierbaren Monomere C) eingesetzt werden. Acrylsäure, Methacrylsäure, Maleinsäure, N-Vinylpyrrolidon und N-Vinylcaprolactam werden von den oben beschriebenen copolymerisierbaren Monomeren C) ganz besonders bevorzugt.

Gemäß einer vorteilhaften Ausführungsform der vorliegenden Erfindung formuliert man Mittel, enthaltend ein Copolymerisat aus
A) Vinylformamid und/oder N-Vinyl-N-methylacetamid;
B) wenigstens einem (Meth)acrylsäureester der oben beschriebenen Fettalkohole mit 12 bis 24 Kohlenstoffatomen und/oder Vinylester der oben beschriebenen Fettsäuren mit 8 bis 18 Kohlenstoffatomen; und
C) gegebenenfalls Acrylsäure, Methacrylsäure, Maleinsäure, Vinylpyrrolidon oder N-Vinylcaprolactam.

Die Herstellung der Copolymerisate erfolgt nach bekannten Verfahren, beispielsweise der Lösungs-, Fällungs-, Suspensions- oder umgekehrten Suspensionspolymerisation, oder der Emulsions- bzw. umgekehrten Emulsionspolymerisation unter Verwendung von Verbindungen, die unter Polymerisationsbedingungen Radikale bilden.

So sind z.B. aus der EP 0 071 050 lineare Polymerisate bekannt, die Vinylformamideinheiten einpolymerisiert enthalten. Diese Polymerisate werden durch Homopolymerisation hergestellt.

Copolymerisate aus N-Vinylcarbonsäureamiden und anderen monoethylenisch ungesättigten Verbindungen, wie Acrylsäure, Acrylsäureester, Vinylacetat, N-Vinylpyrrolidon oder Acrylnitril sind ebenfalls in der Literatur beschrieben. Bekannt sind auch die daraus durch Einwirkung von Säuren oder Basen erhältlichen modifizierten Polymerisate, bei denen die Carboamidgruppen ganz oder teilweise aus den einpolymerisierten N-Vinylcarbonsäureamiden eliminiert sein können und bei denen die einpolymerisierten Comonomere gegebenenfalls hydrolysiert sind. Exemplarisch seien hier die EP 0 216 387, EP 0 251 182, EP 0 528 409, WO 82/02073, JP 84/033302, JP 84/039399, EP 0 337 310 und DE 43 22 854 genannt.

Die Polymerisationstemperaturen liegen üblicherweise in dem Bereich von 30 bis 200°C, vorzugsweise 40 bis 100°C. Geeignete Initiatoren sind beispielsweise Azo- und Peroxyverbindungen sowie die üblichen Redox-Initiatorsysteme, wie Kombinationen aus Wasserstoffperoxid und reduzierend wirkenden Verbindungen, beispielsweise Natriumsulfit, Natriumbisulfit, Natriumformaldehydsulfoxylat und Hydrazin.

Die Copolymeren besitzen K-Werte von mindestens 7, vorzugsweise 10 bis 30. Die Polymeren können jedoch K-Werte bis zu 300 haben. Die K-Werte werden in wäßriger Lösung bei 25°C bei Konzentrationen, die je nach K-Wert-Bereich zwischen 0,1 % und 5 % liegen, nach H. Fikentscher, Cellulose-Chemie, Bd. 13, 58 - 64 und 71 bis 74 (1932) bestimmt.

Unter wasserunlöslichen Inhaltsstoffen versteht man erfindungsgemäß Stoffe, die nicht in jedem Verhältnis mit Wasser mischbar sind. Häufig lassen sich diese nicht in effektiven, d.h. für die Wirksamkeit erforderlichen, Konzentrationen lösen. Es handelt sich vor allem um Stoffe, deren Löslichkeit in Wasser weniger als 30 Gew.-% und insbesondere weniger als 20 Gew.-% bei 25°C beträgt. Besonders vorteilhaft kommt die vorliegende Erfindung bei Inhaltsstoffen mit Löslichkeiten in Wasser von weniger als 5 Gew.-% und insbesondere von weniger als 1 Gew.-% zum tragen.

Zu den erfindungsgemäßen wasserunlöslichen Inhaltsstoffen gehören Wirk- und Hilfsstoffe zur pharmazeutischen und kosmetischen Anwendung an Mensch und Tier, zur Pflanzenbehandlung oder für die Ernährungstechnologie.

Beispiele für wasserunlösliche pharmazeutische Wirkstoffe sind fettlösliche Vitamine und Provitamine, insbesondere Vitamine der E-Gruppe, Proteaseinhibitoren, wie Ritonavir, Indinavir oder Saquinavir, Amlodipin, Astaxanthin, Astemizol, Beclomethason, Benzocain, Betamethason, Bromazepam, Bromocriptin, Budesonid, Campher, Captopril, Carbamazepin, Carboplatin, Chloramphenicol, Chlorhexidin, Cyclosporin, Cisplatin, Clarithromycin, Clonazepam, Clotrimazol,Clozapin, Codein, Desogestrel, Dexamethason, Diazepam, Digoxin, Dihydrocodein, Dihydroergotamin, Dihydroergotoxin, Ephedrin, Epinephrin, Erythromycin, Estradiol, Ethinylestradiol, Etoposid, Eucalyptus Globulus, Felodipin, Fentanyl, Fluconazol, Fluorouracil, Fluoxetin, Flurbiprofen, Furosemid, Gentamicin, Gingko Biloba, Glibenclamid, Griseofulvin, Guaifenesin, Haloperidol, Hydrocodon, Hydrocortison, Hydromorphon, Ibuprofen, Indomethacin, Isotretinoin, Itraconazol, Ketotifen, Ketoconazol, Ketoprofen, Ketorolac, Levonorgestrel, Lidocain, Lorazepam, Methotrexat, Methylprednisolon, Miconazol, Naproxen, Neomycin, Nicardipin, Nicotin, Nifedipin, Nimodipin, Nitrazepam, Nitrendipin, Nizatidin, Norethisteron, Norgestrel, Nystatin, Ofloxacin, Ondansetron, Paclitaxel, Phenobarbital, Phenytoin, Piroxicam, Polymyxin B, Prazepam, Prednisolon, Prednison, Propafenon, Reserpin, Retinol, Riboflavin, Rifampicin, Sulbactam, Sulfamethoxazol, Sulfasalazin, Tamoxifen, Tretinoin, Triamcinolon-Acetonid, Triamteren, Trimethoprim, Troxerutin, Vitamin E, Zidovudin.

Wirk- und Hilfsstoffe zur kosmetischen Anwendung betreffen insbesondere die Hautpflege, die Haarkosmetik, die Nagelpflege oder die Mundhygiene. Zu nennen sind beispielsweise Parfumöle, ätherische Öle, Essenzen oder ölige Badezusätze.

Beispiele für Wirkstoffe zur Pflanzenbehandlung sind Pestizide, Herbizide, Fungizide oder Insektizide vor allem für Spritz- oder Gießbrühen, wie Strobilurine, Vinclozolin oder Epiconazol.

Zu den Wirk- und Hilfsstoffen für die Ernährungstechnologie gehören Nahrungsergänzungsmittel, beispielsweise für diätetische Lebensmittel, Lebensmittelfarbstoffe, wie Carotinoide, oder Futtermittelzusätze für die Tierernährung.

Bei den erfindungsgemäßen Mitteln handelt es sich demnach vor allem um pharmazeutische und kosmetische Formulierungen, Formulierungen zur Pflanzenbehandlung und zu ernährungstechnologischen Zwecken. Diese sind vorzugsweise flüssig (auch als Spray), fest oder halbfest. Im Hinblick auf flüssige und insbesondere auf wäßrige Formulierungen bietet die Erfindung besondere Vorteile.

Im Bereich der pharmazeutischen Formulierungen sind beispielsweise feste Arzneiformen, wie Pulver, Puder, Granulate, Tabletten, Dragees, Kapseln, Suppositorien oder vaginale Arzneiformen, halbfeste Arzneiformen, wie Salben, Cremes, Hydrogele, Pasten oder Pflaster, sowie flüssige Arzneiformen, wie Lösungen, Emulsionen, insbesondere Öl-in-Wasser-Emulsionen, Suspensionen, beispielsweise Lotionen, Injektions- und Infusionszubereitungen, Augen- und Ohrentropfen, zu nennen.

Zu den kosmetischen Mitteln gehören beispielsweise Hautpflegemittel, wie Hautreinigungsmittel, beispielsweise Seifen oder Badepräparate, Hautpflegemittel, in der Regel Emulsionen und insbesondere Öl-in-Wasser-Emulsionen, dekorative Körperpflegemittel für Gesicht, Augen, Lippen und Nägel, Intim- und Fußpflegemittel, Lichtschutzmittel, Hautbräunungsmittel, Depigmentierungsmittel, insektenabwehrende Mittel, Deodorantien, Antitranspirantien, Haarentfernungs- und Rasiermittel, Duftmittel, Zahn- und Mundpflegemittel oder Haarbehandlungsmittel, beispielsweise zum Waschen, Pflegen, Verformen, Festigen, Blondieren oder Färben der Haare.

Mittel zur Pflanzenbehandlung können beispielsweise in Form von direkt versprühbaren Lösungen, Pulvern, Suspensionen, auch hochprozentigen wäßrigen Suspensionen oder Dispersionen, Emulsionen, Pasten, Stäubemitteln, Streumitteln oder Granulaten zum versprühen, Vernebeln, Verstäuben, Verstreuen oder Gießen vorliegen.

Die erfindungsgemäßen Mittel können neben den Copolymerisaten und den wasserunlöslichen Inhaltsstoffen weitere übliche Hilfsstoffe in den dafür üblichen Mengen enthalten. Hierzu zählen beispielsweise Antioxidantien, Antireizstoffe, Antistatika, Badezusätze, Chelatbildner, Desinfektionsmittel, Dispergiermittel, Dragierhilfsmittel, Emulgatoren, Emulsionsstabilisatoren, gegebenenfalls ethoxylierte und/oder propoxylierte Fettalkohole, Fettamine, Fettaminoxide, Fettsäurealkylolamide, Fettsäureester, Fettsäuren, Feuchthaltemittel, Filmbildner, Gelbildner, Geruchsmaskierungsmittel, Geschmackskorrigentien, Haarkonditioniermittel, Haarlackrohstoffe, Haarpflegemittel, Harze, Hautöle, Hautpflegemittel, Hautschutzstoffe, Hydrokolloide, Konservierungsmittel, Lippenpflegemittel, Lösemittel, Lösungsvermittler, Moisturizers, Netzmittel, Neutralisierungsmittel, Perlmuttglanzstoffe, Permeationsbeschleuniger, Pigmente, Protein-Derivate und/oder -Hydrolysate, Pudergrundlagen, quaternäre Ammoniumverbindungen, Rückfettungs- und Überfettungsmittel, Salben-, Creme- oder Öl-Grundstoffe, Salbengrundlagen, Schaumbildner, -förderer, oder -verbesserungsmittel, Schaumstabilisatoren, Schaumverhütungsmittel, Silikon-Derivate, Spreithilfsmittel, Stabilisatoren, Sterilanzien, Stiftmassen, Süßstoffe, Süßungsmittel, Suppositoriengrundlagen, Suspendiermittel, Tabletten-Hilfsstoffe, wie Bindemittel, Füllstoffe, Gleitmittel, Sprengmittel oder Überzüge, Tone, Treibstoffe, Trocknungsmittel, Trübungsmittel, Verdickungsmittel, Vergällungsmittel, Wachse, waschrohstoffe, Weichmacher, Weißöle, Wirkstoffträger oder Hilfsstoffe für Zahnpflegemittel, wie Putzkörper und Waschrohstoffe. Eine diesbezügliche Ausgestaltung beruht auf fachmännischem Wissen, wie es beispielsweise in Fiedler, H.P., Lexikon der Hilfsstoffe für Pharmazie, Kosmetik und angrenzende Gebiete, 4. Auflage, Aulendorf: ECV-Editio-Kantor-Verlag, 1996, dargestellt ist.

Bezogen auf das Gesamtgewicht des Mittels enthalten die erfindungsgemäßen Mittel in der Regel 0,05 Gew.-% bis 20 Gew.-%, vorzugsweise 0,1 bis 10 Gew.-% und besonders bevorzugt 0,5 bis 5 Gew.-% an erfindungsgemäßem Copolymerisat sowie 0,1 Gew.-% bis 90 Gew.-%, vorzugsweise 0,1 bis 60 Gew.-% an unlöslichem Inhaltstoff.

Die erfindungsgemäßen Copolymerisate eignen sich in hervorragender Weise als Lösungsvermittler (Solubilisatoren). Unter Lösungsmittler werden Stoffe verstanden, die durch ihre Gegenwart andere, in einem bestimmten Lösungsmittel praktisch unlösliche Verbindungen in diesem Lösungsmittel löslich oder dispergierbar, d.h. suspendierbar oder emulgierbar machen. Demnach eignen sich die erfindungsgemäßen Copolymerisate als Lösungsvermittler für wasserunlösliche Inhaltsstoffe, insbesondere für die oben genannten Wirk- oder Hilfsstoffe zur pharmazeutischen oder kosmetischen Anwendung, zur Pflanzenbehandlung oder für die Ernährungstechnologie.

Ein weiterer wichtiger Gesichtspunkt ist die Verwendung zur Erhöhung der Bioverfügbarkeit von Wirkstoffen, insbesondere im Bereich der Pharmazie und Kosmetik. Für die topische Anwendung eignen sich die erfindungsgemäßen Copolymerisate als Permeationsbeschleuniger, das heißt zur erleichterten Überwindung von Permeationsbarrieren, wie Haut und Schleimhaut. Auch bedarf es in vielen der oben genannten Mittel einer Stabilisierung von Flüssig/Flüssig- und/oder Fest/Flüssig-Mischungen, bei denen die jeweiligen Phasen nicht miteinander mischbar bzw. spontan keine homogene Mischung ergeben. Die erfindungsgemäßen Copolymerisate finden daher auch Anwendung als Stabilisatoren von Dispersionen, d.h. Emulsionen, insbesondere Öl-in-Wasser-Emulsionen, oder auch Suspensionen. In dieser Eigenschaft werden sie häufig auch als Schutzkolloide bezeichnet.

Die folgenden Beispiele sollen die Erfindung veranschaulichen, ohne sie zu beschränken.

### Beispiel 1

1 g eines Copolymerisats aus 90 Gew.-% N-Vinylformamid und 10 Gew.-% Stearylacrylat wurde in 100 ml Wasser gelöst. Der K-Wert betrug 17,5. In 1 ml dieser Lösung konnten 190 µg Diazepam solubilisiert werden.

### Beispiel 2

1 g eines Copolymerisats aus 40 Gew.-% N-Vinylformamid, 40 Gew.-% N-Vinylcaprolactam und 20 Gew.-% Cetylmethacrylat wurde in 100 ml Wasser gelöst. Der K-Wert dieser Lösung betrug 20,5. In 1 ml dieser Lösung konnten 215 µg Diazepam solubilisiert werden.

### Beispiel 3

1 g eines Copolymerisats aus 60 Gew.-% N-Vinylpyrrolidon, 20 Gew.-% N-Vinylformamid und 20 Gew.-% Dodecylmethacrylat wurde in 100 ml Wasser gelöst. Der K-Wert dieser Lösung betrug 15,7. In 1 ml dieser Lösung konnten 180 µg Diazepam gelöst werden.

### Beispiel 4

1 g eines Copolymerisats aus 90 Gew.-% N-Methyl-N-vinylacetamid und 10 Gew.-% Stearinsäurevinylester wurde in 100 ml Wasser gelöst. Der K-Wert dieser Lösung betrug 23,4. In 1 ml dieser Lösung konnten 220 µg Diazepam gelöst werden.

## Patentansprüche

1. Mittel, enthaltend wenigstens einen wasserunlöslichen Inhaltstoff und wenigstens ein Copolymerisat aus
A) 5 bis 99 Gew.-% wenigstens eines N-Vinylcarbonsäureamids der Formel I 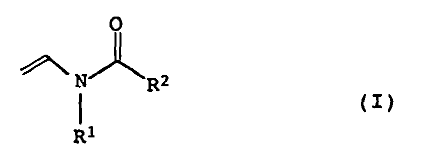 worin R¹ und R² unabhängig voneinander für Wasserstoff oder C₁-C₆-Alkyl stehen;
B) 1 bis 95 Gew.-% wenigstens eines Monomers mit hydrophobem Rest, das mit Vinylcarbonsäureamiden der Formel I copolymerisierbar ist und das ausgewählt ist unter
b1) Estern monoethylenisch ungesättigter C₃-C₈-Carbonsäuren mit aliphatischen oder cycloaliphatischen C₈-C₃₀-Alkoholen;
b2) Amiden monoethylenisch ungesättigter C₃-C₈-Carbonsäuren mit primären oder sekundären Aminen mit wenigstens einem aliphatischen oder cycloaliphatischen C₈-C₃₀-Rest;
b3) Vinylestern aliphatischer oder cycloaliphatischer C₈-C₃₀-Carbonsäuren; oder
b4) Vinylethern aliphatischer oder cycloaliphatischer C₈-C₃₀-Alkohole;
und gegebenenfalls
C) 0 bis 94 Gew.-% wenigstens eines weiteren copolymerisierbaren Monomers.

2. Mittel nach Anspruch 1, **dadurch gekennzeichnet, daß** das N-Vinylcarbonsäureamid der Formel I ausgewählt ist unter N-Vinylformamid oder N-Vinyl-N-methylacetamid.

3. Mittel nach einem der vorhergehenden Anspüche, **dadurch gekennzeichnet, daß** die Monomere b1) und b2) ausgewählt sind unter Verbindungen der Formel II 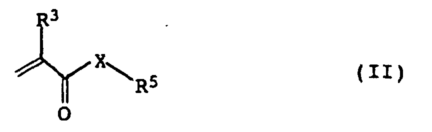 worin R³ für ein Wasserstoffatom oder eine Methylgruppe steht,
X für O oder NR⁴ steht,
R⁴ für H oder C₁-C₃₀-Alkyl steht und
R⁵ für C₈-C₃₀-Alkyl, C₈-C₃₀-Cycloalkyl oder C₈-C₃₀-Alkenyl steht.

4. Mittel nach einem der vorhergehenden Anspüche, **dadurch gekennzeichnet, daß** das weitere copolymerisierbare Monomer ausgewählt ist unter
c1) monoethylenisch ungesättigten C₃-C₈-Carbonsäuren;
c2) Estern monoethylenisch ungesättigter C₃-C₈-Carbonsäuren mit aliphatischen oder cycloaliphatischen C₁-C₇-Alkoholen, C₁-C₄-Diolen, Mono- oder Di-C₁-C₄-alkylamino-C₁-C₄-alkoholen;
c3) Amiden monoethylenisch ungesättigter C₃-C₈-Carbonsäuren, Mono- oder Di-C₁-C₇-alkylamiden monoethylenisch ungesättigter C₃-C₈-Carbonsäuren;
c4) Nitrilen monoethylenisch ungesättigter C₃-C₈-Carbonsäuren;
c5) N-Vinyllactamen und N-Vinylimidazolen;
c6) monoethylenisch ungesättigten Verbindungen mit Sulfonsäuregruppen;
c7) monoethylenisch ungesättigten Verbindungen mit Phosphonsäuregruppen;
c8) Vinylestern aliphatischer oder cycloaliphatischer C₁-C₇-Carbonsäuren;
c9) Vinylethern aliphatischer und cycloaliphatischer C₁-C₇-Alkohole;
c10) Vinylaromaten;
c11) Acrylamidoglycolsäure oder Diallylammoniumchlorid.

5. Mittel nach Anspuch 4, **dadurch gekennzeichnet, daß** das weitere copolymerisierbare Monomer ausgewählt ist unter Acrylsäure, Methacrylsäure, Maleinsäure, N-Vinylpyrrolidon und N-Vinylcaprolactam.

6. Mittel nach Anspuch 1, enthaltend wenigstens ein Copolymerisat aus
A) Vinylformamid und/oder N-Vinyl-N-methylacetamid;
B) wenigstens einem (Meth)acrylsäureester von Fettalkohole mit 12 bis 24 Kohlenstoffatomen und/oder Vinylester von Fettsäuren mit 8 bis 18 Kohlenstoffatomen; und
C) gegebenenfalls Acrylsäure, Methacrylsäure, Maleinsäure, Vinylpyrrolidon oder N-Vinylcaprolactam.

7. Mittel nach einem der vorhergehenden Anspüche, **dadurch gekennzeichnet, daß** der wasserunlösliche Inhaltstoff ein Wirk- oder Hilfsstoff zur pharmazeutischen oder kosmetischen Anwendung, zur Pflanzenbehandlung oder für die Ernährungstechnologie ist.

8. Mittel nach einem der vorhergehenden Anspüche, **dadurch gekennzeichnet, daß** das Copolymerisat aus
A) 10 bis 90 Gew.-% wenigstens eines N-Vinylcarbonsäureamids der Formel I,
B) 5 bis 40 Gew.-% wenigstens eines Monomers B mit hydrophobem Rest, das mit N-Vinylcarbonsäureamiden der Formel I copolymerisierbar ist,
C) 0 bis 50 Gew.-% wenigstens eines weiteren copolymerisierbaren Monomers,
aufgebaut ist.

9. Verwendung eines Copolymerisates der Ansprüche 1 bis 8 als Lösungsvermittler.

10. Verwendung eines Copolymerisates der Ansprüche 1 bis 8 als Schutzkolloid zur Stabilisierung von Öl-in-Wasser-Emulsionen.

## Claims

1. A composition comprising at least one water-insoluble ingredient and at least one copolymer of
A) from 5 to 99% by weight of at least one N-vinylcarboxamide of the formula I 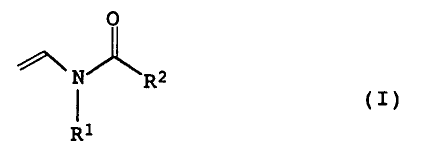 where R¹ and R² independently of one another are hydrogen or C₁-C₆-alkyl;
B) from 1 to 95% by weight of at least one monomer having a hydrophobic radical which can be copolymerized with vinylcarboxamides of the formula I and is chosen from;
b1) esters of monoethylenically unsaturated C₃-C₈-carboxylic acids with aliphatic or cycloaliphatic C₈-C₃₀-alcohols;
b2) amides of monoethylenically unsaturated C₃-C₈-carboxylic acids with primary or secondary amines having at least one aliphatic or cycloaliphatic C₈-C₃₀-radical;
b3) vinyl esters of aliphatic or cycloaliphatic C₈-C₃₀-carboxylic acids; or
b4) vinyl ethers of aliphatic or cycloaliphatic C₈-C₃₀-alcohols;
and optionally
C) from 0 to 94% by weight of at least one other copolymerizable monomer.

2. A composition as claimed in claim 1, wherein the N-vinylcarboxamide of the formula I is chosen from N-vinylformamide or N-vinyl-N-methylacetamide.

3. A composition as claimed in either of the preceding claims, wherein the monomers b1) and b2) are chosen from compounds of the formula II 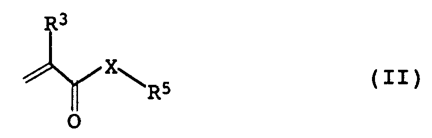 where R³ is a hydrogen atom or a methyl group,
X is O or NR⁴,
R⁴ is H or C₁-C₃₀-alkyl, and
R⁵ is C₈-C₃₀-alkyl, C₈-C₃₀-cycloalkyl or C₈-C₃₀-alkenyl.

4. A composition as claimed in one of the preceding claims, wherein the other copolymerizable monomer is chosen from
c1) monoethylenically unsaturated C₃-C₈-carboxylic acids;
c2) esters of monoethylenically unsaturated C₃-C₈-carboxylic acids with aliphatic or cycloaliphatic C₁-C₇-alcohols, C₁-C₄-diols, mono- or di-C₁-C₄-alkylamino-C₁-C₄-alcohols;
c3) amides of monoethylenically unsaturated C₃-C₈-carboxylic acids, mono- or di-C₁-C₇-alkylamides of monoethylenically unsaturated C₃-C₈-carboxylic acids;
c4) nitriles of monoethylenically unsaturated C₃-C₈-carboxylic acids;
c5) N-vinyllactams and N-vinylimidazoles;
c6) monoethylenically unsaturated compounds containing sulfonic acid groups;
c7) monoethylenically unsaturated compounds containing phosphonic acid groups;
c8) vinyl esters of aliphatic or cycloaliphatic C₁-C₇-carboxylic acids;
c9) vinyl ethers of aliphatic and cycloaliphatic C₁-C₇-alcohols;
c10) vinylaromatic compounds;
c11) acrylamidoglycolic acid or diallylammonium chloride.

5. A composition as claimed in claim 4, wherein the other copolymerizable monomer is chosen from acrylic acid, methacrylic acid, maleic acid, N-vinylpyrrolidone and N-Vinylcaprolactam.

6. A composition as claimed in claim 1, comprising at least one copolymer of
A) vinylformamide and/or N-vinyl-N-methylacetamide;
B) at least one (meth)acrylic ester of fatty alcohols having from 12 to 24 carbon atoms and/or vinyl esters of fatty acids having from 8 to 18 carbon atoms; and
C) optionally acrylic acid, methacrylic acid, maleic acid, vinylpyrrolidone or N-vinylcaprolactam.

7. A composition as claimed in one of the preceding claims, wherein the water-insoluble ingredient is an active ingredient or auxiliary for pharmaceutical or cosmetic use, for crop treatment or for nutrition technology.

8. A composition as claimed in one of the preceding claims, wherein the copolymer is made up of
A) from 10 to 90% by weight of at least one N-vinylcarboxamide of the formula I,
B) from 5 to 40% by weight of at least one monomer B having a hydrophobic radical which can be copolymerized with N-vinylcarboxamides of the formula I,
c) from 0 to 50% of at least one other copolymerizable monomer.

9. The use of a copolymer of claims 1 to 8 as solubility promoter.

10. The use of a copolymer of claims 1 to 8 as protective colloid for the stabilization of oil-in water emulsions.

## Revendications

1. Produit contenant au moins un constituant insoluble dans l'eau et au moins un copolymère de
A) 5 à 99% en poids d'au moins un N-vinylcarboxamide de formule I : 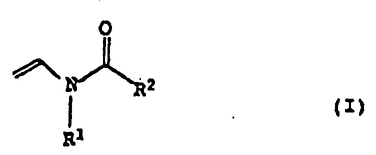 dans laquelle R¹ et R² représentent chacun, indépendamment l'un de l'autre, l'hydrogène ou un groupe alkyle en C₁-C₆ ;
B) 1 à 95% en poids d'au moins un monomère à radical hydrophobe, qui est copolymérisable avec les vinylcarboxamides de formule I et est choisi parmi
b1) les esters d'acides carboxyliques à insaturation monoéthylénique en C₃-C₈ et d'alcools aliphatiques ou cycloaliphatiques en C₈-C₃₀ ;
b2) les amides d'acides carboxyliques à insaturation monoéthylénique en C₃-C₈ et d'amines primaires ou secondaires contenant au moins un radical aliphatique ou cycloaliphatique en C₈-C₃₀ ;
b3) les esters vinyliques d'acides carboxyliques aliphatiques ou cycloaliphatiques en C₈-C₃₀ ; ou bien
b4) les éthers vinyliques d'alcools aliphatiques ou cycloaliphatiques en C₈-C₃₀ ; et le cas échéant
C) 0 à 94% en poids d'au moins un autre monomère copolymérisable.

2. Produit selon la revendication 1, **caractérisé par le fait que** le N-vinylcarboxamide de formule I est choisi parmi le N-vinylformamide et le N-vinyl-N-méthylacétamide.

3. Produit selon l'une des revendications qui précèdent, **caractérisé par le fait que** les monomères b1) et b2) sont choisis parmi les composés de formule II : 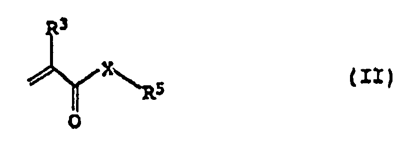 dans laquelle R³ représente un atome d'hydrogène ou un groupe méthyle,
X représente O ou NR⁴,
R⁴ représente H ou un groupe alkyle en C₁-C₃₀ et
R⁵ représente un groupe alkyle en C₈-C₃₀, cycloalkyle en C₈-C₃₀ ou alcényle en C₈-C₃₀.

4. Produit selon l'une des revendications qui précèdent, **caractérisé par le fait que** l'autre monomère copolymérisable est choisi parmi
c1) les acides carboxyliques à insaturation monoéthylénique en C₃-C₈,
c2) les esters d'acides carboxyliques à insaturation monoéthylénique en C₃-C₈ et d'alcools aliphatiques ou cycloaliphatiques en C₁-C₇, de diols en C₁-C₄, de mono- ou di-(alkyle en C₁-C₄)aminoalcools en C₁-C₄ ;
c3) les amides d'acides carboxyliques à insaturation monoéthylénique en C₃-C₈, les mono- ou di-(alkyle en C₁-C₇)amides d'acides carboxyliques à insaturation monoéthylénique en C₃-C₈ ;
c4) les nitriles d'acides carboxyliques à insaturation monoéthylénique en C₃-C₈,
c5) les N-vinyllactames et N-vinylimidazoles ;
c6) les composés à insaturation monoéthylénique portant des groupes acide sulfonique ;
c7) les composés à insaturation monoéthylénique portant des groupes acide phosphonique ;
c8) les esters vinyliques d'acides carboxyliques aliphatiques ou cycloaliphatiques en C₁-C₇ ;
c9) les éthers vinyliques d'alcools aliphatiques et cycloaliphatiques en C₁-C₇ ;
c10) les composés vinylaromatiques ;
c11) l'acide acrylamidoglycolique ou le chlorure de diallylammonium.

5. Produit selon la revendication 4, **caractérisé par le fait que** l'autre monomère copolymérisable est choisi parmi l'acide acrylique, l'acide méthacrylique, l'acide maléique, la N-vinylpyrrolidone et le N-vinylcaprolactame.

6. Produit selon la revendication 1, contenant au moins un copolymère de
A) le vinylformamide et/ou le N-vinyl-N-méthylacétamide ;
B) au moins un ester (méth)acrylique d'alcool gras en C₁₂-C₂₄ et/ou un ester vinylique d'acide gras en C₈-C₁₈; et
C) le cas échéant, l'acide acrylique, l'acide méthacrylique, l'acide maléique, la vinylpyrrolidone ou le N-vinylcaprolactame.

7. Produit selon l'une des revendications qui précèdent, **caractérisé par le fait que** le constituant insoluble dans l'eau est une substance active ou un produit auxiliaire destiné à des applications pharmaceutiques ou cosmétiques, au traitement de végétaux ou aux industries alimentaires.

8. Produit selon l'une des revendications qui précèdent, **caractérisé par le fait que** le copolymère est constitué de
A) 10 à 90% en poids d'au moins un N-vinylcarboxamide de formule I,
B) 5 à 40% en poids d'au moins un monomère B) à radical hydrophobe, copolymérisable avec les N-vinylcarboxamides de formule I,
C) 0 à 50% en poids d'au moins un autre monomère copolymérisable.

9. Utilisation d'un copolymère selon les revendications 1 à 8 en tant qu'agent solubilisant.

10. Utilisation d'un copolymère selon les revendications 1 à 8 en tant que colloïde protecteur pour la stabilisation d'émulsions huile-dans-l'eau.
